Europäisches Patentamt

European Patent Office

Office européen des brevets

(11) Veröffentlichungsnummer: **0 318 974**
**A2**

## (12) EUROPÄISCHE PATENTANMELDUNG

(21) Anmeldenummer: 88120010.9

(22) Anmeldetag: 30.11.88

(51) Int. Cl.⁴: **H04M 1/31**

(30) Priorität: **03.12.87 DE 3740999**

(43) Veröffentlichungstag der Anmeldung:
**07.06.89 Patentblatt 89/23**

(84) Benannte Vertragsstaaten:
**AT CH DE GB IT LI NL**

(71) Anmelder: **Siemens Aktiengesellschaft Berlin und München**
**Wittelsbacherplatz 2**
**D-8000 München 2(DE)**

(72) Erfinder: **Nijmolen, Gerrit Willem**
**Keizerdwarsweg 42**
**NL-7102 Winterswijk(NL)**

(54) Schaltungsanordnung für einen elektronischen NSI-Kontakt in einer Fernsprechstation.

(57) Die Erfindung betrifft eine Schaltungsanordnung für einen elektronischen NSI-Kontakt in einer Fernsprechstation, wobei dieser NSI-Kontakt durch einen mit seiner Emitter-Kollektorstrecke in einer Ader der Teilnehmerschleife liegenden Längstransistor gebildet wird, der an seiner Basis über einen Stromweg für seinen Basisstrom zur anderen Ader der Teilnehmerleitung zur Bildung der Wählimpulse gesteuert wird.

Die Aufgabe der Erfindung besteht darin, diesen Stromweg für unterschiedliche Stromstärken auf der Leitung immer ausreichend niederohmig, aber frei von unnötigen Verlusten durch hohe Einfügungsdämpfung zu verwirklichen.

Dies wird dadurch erreicht, daß man den Stromweg als eine von der Stromstärke auf der Leitung abhängige Stromregelung ausbildet.

Die Anwendung kann grundsätzlich bei allen mikroprozessorgesteuerten Fernsprechstationen erfolgen.

FIG 2

EP 0 318 974 A2

## Schaltungsanordnung für einen elektronischen NSI-Kontakt in einer Fernsprechstation

Die Erfindung betrifft eine Schaltungsanordnung für einen elektronischen NSI-Kontakt in einer Fernsprechstation, welcher durch einen in einer ersten Ader der Teilnehmerleitung angeordneten, der Sprechschaltung der Fernsprechstation vorgeschalteten NPN-Längstransistor gebildet wird, dessen Basis über die Serienschaltung eines ersten ohmschen Widerstandes und die Kollektor-Emitterstrecke eines NPN-Steuertransistors mit der zweiten Ader der Teilnehmerleitung verbunden ist, wobei der NPN-Steuertransistor an seiner Basis durch Potentiale eines Mikroprozessors angesteuert wird.

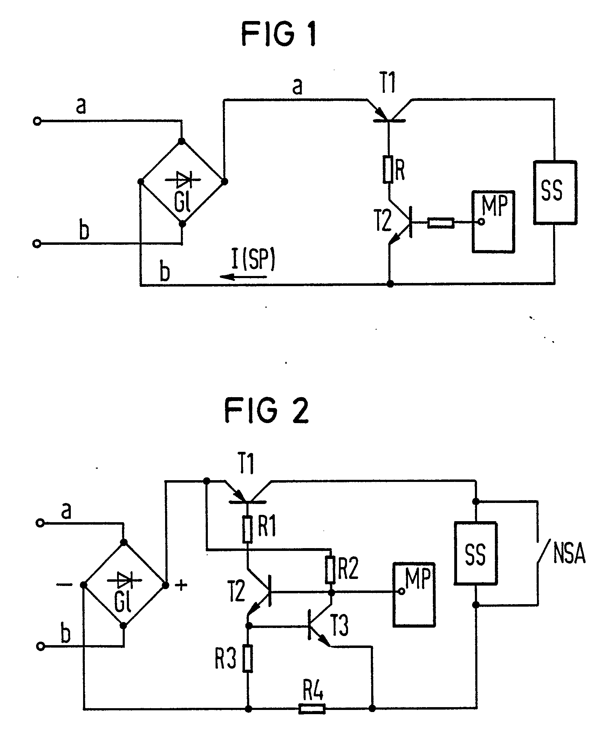

Es ist bekannt, den NSI-Kontakt in einer Fernsprechstation als elektronischen Schalter auszubilden (Längstransistor in einer Ader der Teilnehmerleitung) und diesen Schalter über einen Tastaturspeicher oder den für die Teilnehmerwahl zuständigen Ausgang eines stationseigenen Mikroprozessors zu steuern (DE-PS 36 09 706). Dabei wird der elektronische Schalter im Sprechzustand durchgeschaltet sein und während des Wahlvorganges im Takt der Wahlimpulse im Sperrzustand oder Durchgangszustand gesteuert. Das Prinzip hierzu zeigt Figur 1, wobei als elektronischer Schalter in einer Ader der Teilnehmerleitung ein PNP-Längstransistor vorgesehen ist (T1), welcher über seine Basis über einen Widerstand und die Kollektor-Emitterstrecke des Steuertransistors angesteuert wird. Das Durchschalten des Längstransistors T1 ist von seinem entsprechenden Basisstrom abhängig. Damit der Längstransistor T1 bei jedem z.B. von der Leitungslänge abhängigen Leitungsstrom sicher durchschaltet, muß der Basisstrom stets für den maximalen Leitungsstrom und damit für die kürzeste Teilnehmerleitung ausgelegt sein. Entsprechend klein muß daher auch der der Basis des Längstransistors nachgeschaltete Widerstand R gewählt werden. Diese Schaltungsanordnung bedingt einmal einen relativ hohen Leistungsverlust bei kleinen Strömen auf der Teilnehmerleitung und zum zweiten durch den kleinen Widerstand eine relativ hohe Einfügungsdämpfung bzw. Einfluß auf die Impedanz der Fernsprechstation.

Die Aufgabe der Erfindung soll daher darin bestehen, eine Schaltungsanordnung für einen elektronischen NSI-Kontakt in einer Fernsprechstation zu finden, bei der der Basisstrom des Längstransistor an den auf der Teilnehmerleitung fließenden Speisestrom automatisch angepaßt wird und die Einfügungsdämpfung (Einfluß auf die Impedanz) verringert wird.

Dies wird dadurch erreicht, daß der Emitter des PNP-Längstransistors über die Serienschaltung eines zweiten ohmschen Widerstandes und die Kollektor-Emitterstrecke des zusätzlichen NPN-Transistors mit der zweiten Ader der Teilnehmerleitung verbunden ist, daß der NPN-Transistor kollektorseitig mit der Basis und basisseitig direkt mit dem Emitter des NPN-Steuertransistors und über einen dritten ohmschen Widerstand mit der zweiten Ader der Teilnehmerleitung verbunden ist und daß in der zweiten Ader zwischen dem dritten ohmschen Widerstand und dem Emitter des zusätzlichen Transistors ein vierter ohmscher Widerstand angeordnet ist.

Hieraus ergibt sich der Vorteil, daß bei geringem Speisestrom auch ein geringerer Basisstrom des Längstransistors fließt und damit geringere Verluste vorliegen. Da diese Stufe als Stromsenke mit hoher Impedanz arbeitet, ist außerdem die Einfügungsdämpfung und der Einfluß auf die Impedanz nur noch minimal.

Die Erfindung wird anhand zweier Figuren näher erläutert. Die Figur 1 besteht aus der Gleichrichterbrücke G1, einem PNP-Längstransistor T1, einem Steuertransistor T2, dem Widerstand R, der Sprechschaltung SS und einem angedeuteten Mikroprozessor MP.

Die Figur 2 zeigt die Gleichrichterbrücke G1 als Verpolungsschutz, die Adern a/b der Teilnehmerleitung nach dem Verpolungsschutz, die Transistoren T1, T2 und T3, die ohmschen Widerstände R1 bis R4, die Sprechschaltung SS der Fernsprechstation, einen NSA-Kontakt und einen angedeuteten, stationsinternen Mikroprozessor MP.

Nachstehend wird die erfindungsgemäße Schaltungsanordnung näher erläutert.

Hierzu wird zunächst nochmals auf die Figur 1 verwiesen, die den Stand der Technik aufzeigt. Es wird davon ausgegangen, daß der Teilnehmer an der Fernsprechstation eine Verbindung zu einer anderen Station aufbauen will. Er betätigt dazu zunächst z.B. durch Abheben des Handapparates einen nicht dargestellten Gabelumschaltkontakt, wodurch an die Fernsprechstation über die Teilnehmerleitung Speisespannung angelegt wird. Die dem Eingang der Station nachgeschaltete Gleichrichterbrücke G1 wirkt dabei als Verpolungsschutz. In einer der der Gleichrichterbrücke G1 nachgeschalteten Adern (hier a) der Teilnehmerleitung ist der nachfolgenden Sprechschaltung SS (Mikrofon, Telefon usw.) die Emitter-Kollektorstrecke eines PNP-Längstransistors T1 angeordnet. Dieser Längstransistor T1 ist nach abgehobenem Handapparat vor dem Wahlvorgang und während der Gesprächszeit ständig durchgeschaltet, so daß über ihn ein Speisestrom fließt. Die Durchschaltung erfolgt an seiner Basis, über die in Abhängigkeit eines Widerstandes R und der Kollektor-Emitterstrecke eines Steuertransistors T2 zur zweiten Ader (b) der Teilnehmerlei tung ein Basisstrom fließt. Die Kollektor-Emitterstrecke des Steuertransistors T2 wird durch eine entsprechende Ansteuerung seiner Basis von einem stationseigenen Mikroprozessor MP durchgesteuert. Lediglich während des Wahlvorganges wird diese Durchsteuerung im Takt der Wählzeichen unterbrochen, wodurch der Längstransistor TR1 im entsprechenden Takt (Wählimpuls) eine Schleifenunterbrechung vornimmt.Der Schleifenstrom kann nun entsprechend der Leitungslänge unterschiedliche Werte annehmen. Es muß jedoch gewährleistet sein, daß der Längstransistor T1 in jedem Fall den Schleifenstrom voll durchschaltet, um eine Schleifenunterbrechung klar erkennen zu können. Deshalb muß die Steuerstrecke "R,T2" so ausgelegt sein, daß immer ein Basisstrom von T1 fließt, der die Durchschaltung des maximalen Schleifenstromes gewährleistet. Bei längeren Leitungen und damit geringerem Schleifenstrom führt dies zu unnötig hohem Leistungsverlust und wegen des klein zu haltenden Widerstandes R zu einer relativ großen Einfügungsdämpfung.

Um diese Nachteile zu vermeiden, wurde eine Schaltungsanordnung entsprechend Figur 2 entwickelt. Auch hier ist eingangsseitig eine Gleichrichterbrücke G1 als Verpolungsschutz vorgesehen. Der Längstransistor T1 in der Ader a der Teilnehmerleitung entspricht dem Transistor T1 in Figur 1. Ebenso ist als Stromweg für den Basisstrom des Längstransistors T1 zur Ader b die Kollektor-Emitterstrecke eines NPN-Steuertransistors T2 vorgesehen. Der aufgezeigte Kollektorwiderstand R1 hat hier jedoch keine Einstellfunktion für den Basisstrom von T1, sondern er dient lediglich bei Überspannungsschutz als Begrenzung. Die Basis des NPN-Steuertransistors T2 wird wie in Figur 1 direkt von Steuerpotentialen eines stationsinternen Mikroprozessors MP angesteuert. Während der "Sprechzeit" ist der Steuertransistor T2 und damit der Längstransistor T1 durchgeschaltet. Während des Wählvorganges wird der Steuertransistor T2 und damit der Längstransistor T1 zur Schleifenunterbrechung im Rhythmus der Wählzeichen auf- und zugesteuert. Zusätzlich ist jetzt aber die Basis des Steuertransistors einerseits über einen ohmschen Dimensionierungswiderstand R2 mit dem Emitter des Längswiderstandes T1 und damit mit der a-Ader der Teilnehmerleitung nach dem Verpolungsschutz G1 verbunden. Andererseits ist diese Basis (T2) über die Kollektor-Emitterstrecke eines zusätzlichen NPN-Transistors T3 und mit der b-Ader der Teilnehmerleitung verbunden. Die Basis dieses zusätzlichen Transistors T3 ist direkt mit dem Emitter des Steuertransistors T2 verbunden, der seinerseits über einen dritten ohmschen Widerstand R3 mit der b-Ader verbunden ist. Zwischen der Anschlußstelle des Widerstandes R3 und der Anschlußstelle des Emitters des zusätzlichen Transistors T3 an die b-Ader der Teilnehmerleitung ist ein weiterer vierter ohmscher Widerstand R4 angeordnet. Betrachtet man den Spannungsabfall in dieser Schaltungsanordnung, dann ergibt sich: U (R3) = U (BE von T3) + U (R4) Weiterhin gilt:
U (R3) = I (B von T1) . R3 und U (R4) = I (SP) . R4
Daraus resultiert: I (B von T1) = U (BE von T3) + I (SP) .
R4: R3 Dabei ist I (B von T1) der Basisstrom des Längstransistors T1, U (BE von T3) die Emitter-Basisspannung des zusätzlichen Transistors T3 und I (SP) der auf der Teilnehmerleitung in Abhängigkeit der Leitungslänge fließende Speisestrom.

Aus der vorstehenden Gleichung geht hervor, daß sich der Basisstrom des Längstransistors T1 richtungsgleich in Abhängigkeit des Speisestromes ändert. Damit ist eine Basisstromregelung gegeben. Bei kleineren Speiseströmen fließt ein kleinerer Basisstrom. Die Transistoren T2 und T3 bilden somit eine änderbare Stromsenke mit hoher Impedanz. Der Einfluß auf Impedanz und die Einführungsdämpfung ist bei dieser Schaltungsanordnung vernachlässigbar.

Die grundsätzliche Einstellung der Basisstromregelung für einen gewünschten Bereich erfolgt durch die Wahl der Widerstände R3 und R4.

Der geschilderten Schaltungsanordnung nachgeschaltet ist die Sprechschaltung SS, die während des Wahlvorganges niederohmig geschaltet werden kann.

## Ansprüche

Schaltungsanordnung für einen elektronischen NSI-Kontakt in einer Fernsprechstation, welche durch einen in einer ersten Ader der Teilnehmerleitung angeordneten, der Sprechschaltung der Fernsprechstation vorgeschalteten PNP-Längstransistor gebildet wird, dessen Basis über die Serienschaltung eines ersten ohmschen Widerstandes und die Kollektor-Emitterstrecke eines NPN-Steuertransistors mit der zweiten Ader der Teilnehmerleitung verbunden ist, wobei der NPN-Steuertransistor an seiner Basis durch Potentiale eines Mikroprozessors angesteuert wird, **dadurch gekennzeichnet,** daß der Emitter des PNP-Längstransistors (T1) über die Serienschaltung eines zweiten ohmschen Widerstandes (R2) und die Kollektor-Emitterstrecke eines zusätzlichen NPN-Transistors (T3) mit der zweiten Ader (b) der Teilnehmerleitung verbunden ist, daß der zusätzliche NPN-Transistor (T3) kollektorseitig mit der Basis und basisseitig direkt mit dem Emitter des NPN-Steuertransistors (T2) und über einen dritten ohmschen Widerstand (R3) mit der zweiten Ader (b) der Teilnehmerleitung verbunden ist und daß in der zweiten Ader (b) zwischen dem dritten ohmschen Widerstand und dem Emitter des zusätzlichen Transistors (T3) ein vierter ohmscher Widerstand (R4) angeordnet ist.

## FIG 1

## FIG 2